# EUROPÄISCHE PATENTSCHRIFT

(11) **EP 0 715 870 B1**
(45) Veröffentlichungstag und Bekanntmachung des Hinweises auf die Patenterteilung: **12.03.1997**
(21) Anmeldenummer: 95810772.4
(22) Anmeldetag: 06.12.1995
(51) Int. Cl.: B01D 9/00

(54) **Verfahren und Vorrichtung zur Stofftrennung aus einem flüssigen Gemisch durch fraktionierte Kristallisation**
Method and apparatus for separating a substance from a liquid mixture by fractional crystallization
Procédé et dispositif de séparation d'une substance d'un mélange liquide par cristallisation fractionnée

(30) Priorität: 08.12.1994 CH 3716/94
(43) Veröffentlichungstag der Anmeldung: 12.06.1996
(73) Patentinhaber: Sulzer Chemtech AG, CH-8404 Winterthur (CH)
(72) Erfinder: Bischof, Rudolf, CH-9475 Sevelen (CH)
(74) Vertreter: Riederer, Conrad A., Dr.

(56) Entgegenhaltungen:
- FR-A- 1 052 023
- GB-A- 1 218 743
- US-A- 3 272 875
- US-A- 4 296 612

## Beschreibung

Die vorliegende Erfindung betrifft ein Verfahren zur Stofftrennung aus einem flüssigen Gemisch durch fraktionierte Kristallisation durch Abscheiden einer Kristallschicht auf einer Seite einer Wandung eines Kristallisators, die auf der andern Seite gekühlt wird, und nachfolgendem Abschmelzen der Kristallschicht.

Nebst den vorherrschenden Destillationsverfahren gewinnen Kristallisationsverfahren zunehmend an Bedeutung. Dies hat verschiedene Gründe. So hat die Kristallisation z.B. den Vorteil, dass wärmeempfindliche Stoffe bei tiefen Temperaturen gewonnen bzw. gereinigt werden können. Auch ist im Gegensatz zur Vakuumdestillation keine teure Vakuuminstallation notwendig. In vielen Fällen können auch höhere Reinheitgrade als mit Destillation erzielt werden.

Ein wichtiger Vorteil der Kristallisation gegenüber der Destillation sind auch die meist geringeren Energiekosten. Nun ist freilich Kühlenergie in der Regel wesentlich teurer als Heizenergie. Trotzdem liegen aber die Gesamtkosten für Energie bei der Stofftrennung durch Kristallisation meist wesentlich tiefer als bei der Stofftrennung durch Destillation, weil eben bei der Stofftrennung durch Kristallisation der nötige Energieaufwand in der Regel in der Regel wesentlich kleiner ist als bei der Stofftrennung durch Destillation.

Die US-A-3 272 875 beschreibt einen Kristallisator mit Rohren, durch welche ein Kühlmittel fliesst und deren Aussenwandung als Kristallisationsfläche dient. Der Kühlmittelkreislauf ist ein sekundärer Kreislauf und führt flüssiges Kühlmittel vom Ausgang einer Umwälzpumpe zu den einen Enden der Rohre, durch diese Rohre hindurch, von den anderen Enden der Rohre zu einem Wärmetauscher und von dort zurück zur Umwälzpumpe. Der Wärmetauscher dient der Uebertragung der Kühlenergie aus einem primären Kreislauf, nämlich dem Kreislauf eines Kühlsystems. Der Produktkreislauf führt von einer Produktumwälzpumpe zu den Rohraussenwänden bei den einen Enden der Rohre und von den anderen Enden der Rohre zu einem Wärmetauscher und von dort zurück zur Produktumwälzpumpe. Der Wärmetauscher im Produktekreislauf erhält Wärmeenergie von einer Wärmequelle.

Im Betrieb des beschriebenen Kristallisators bildet sich an der Aussenwandung der Rohre eine Kristallschicht. Die Druckschrift enthält keine Angaben, wie die Kristallschicht entfernt wird. Es ist aber bekannt, dass die Kristallschicht nach dem Ablassen der Mutterlauge aus dem Produktekreislauf entweder durch Erhöhung der Temperatur im Kühlkreislauf oder durch Einführen und Umwälzen von vorher erzeugtem Produkt abgeschmolzen werden kann. Die zum Abschmelzen notwendige Wärmeenergie kann über den im Produktekreislauf angeordneten Wärmetauscher zugeführt werden. In der zitierten Druckschrift wird nur die labormässige Durchführung des Verfahrens beschrieben. Es finden sich keine Ausführungen darüber, wie das beschriebene Verfahren in die industrielle Praxis umgesetzt werden soll. Insbesondere fehlen auch Angaben zur Durchführung einer mehrstufigen Kristallisation. Es ist aber erkennbar, dass die Notwendigkeit von mehreren Wärmetauschern einen hohen apparativen Aufwand erfordert. Wegen der dadurch vorgegebenen Energieverluste und wegen der gewählten Verfahrensführung entsteht auch ein hoher Energiebedarf, wobei insbesondere die teure Kühlenergie ins Gewicht fällt.

Es sind seit längerer Zeit Bestrebungen im Gange, den für die fraktionierte Kristallisation notwendigen Aufwand an Apparaturen und Energie zu verbessern. So findet sich in der DE-A-17 69 123 die Anregung, den Kristallisator durch das Medium der Kälteanlage direkt zu kühlen, indem eine Dampfentnahme aus dem Mantelraum des Kristallisators erfolgt. Es fehlen aber Angaben, wie dies praktisch verwirklicht werden soll, und es sind in den vierundzwanzig Jahren nach der Publikation der genannten Druckschrift auch keine direkt gekühlte Kristallisatoren bekannt geworden.

Im Gegensatz zum Kristallisator der eingangs erwähnten US-A-3 272 875 werden beim Kristallisator nach der DE-A-1769123 die Rohre von aussen her gekühlt und das flüssige Gemisch von oben her auf der Innenseite der Rohre als Rieselfilm aufgegeben. Ferner wird bei einer mehrstufigen Kristallisation nicht für jede Stufe ein Kristallisator vorgesehen. Eine mehrstufige Kristallisation wird vielmehr in verschiedenen Zyklen in einem einzigen Kristallisator durchgeführt. Um die Energiekosten weiter zu reduzieren, wird vorgeschlagen, die im Kondensator der Kälteanlage entstehende Wärme in einem Heizmitteltank teilweise zu speichern und sie später mittels eines Wärmetauschers im Produktekreislauf zum Abschmelzen des Kristallisats zu verwenden. Ueberschüssige Wärme soll durch Kühlwasser oder in extremen Fällen durch eine zweite Kälteanlage abgeführt werden. Nachteilig sind bei diesem bekannten Verfahren der hohe apparative Aufwand und die Energieverluste bei der Energiespeicherung und -umformung.

Es ist Aufgabe der vorliegenden Erfindung, ein Verfahren zu schaffen, das weniger Energie, insbesondere weniger teure Kühlenergie benötigt und auch mit weniger apparativem Aufwand als bisherige Verfahren auskommt.

Das neue Verfahren zur Stofftrennung aus einem flüssigen Gemisch durch fraktionierte Kristallisation durch Abscheiden einer Kristallschicht an einer Wandung eines Kristallisators ist erfindungsgemäss dadurch gekennzeichnet, dass man zur Kristallisation das Medium an der andern Seite der Wandung verdampfen lässt und dass der Druck der gasförmigen Phase des Mediums im Kristallisator entsprechend der für die Kristallisation benötigten Temperatur geregelt wird. Da bei diesem Verfahren der Kristallisator als Verdampfer für das zur Kühlung verwendete Medium, z.B. Ammoniak, Wasser, usw. arbeitet, ist kein Wärmetauscher notwendig, um Kühlenergie aus dem Kühlmittelkreislauf einer Kältemaschine auf den Kühlmittelkreislauf des Kristallisators zu übertragen. Damit entfallen auch die damit verbundenen Energieverluste. Durch die Regelung des Drucks der gasförmigen Phase des Mediums kann die Verfahrenstemperatur optimal geregelt werden.

Vorteilhaft lässt man das Medium als Rieselfilm an der Wandung hinunterfliessen. Dadurch wird eine gleichmässige Kühlung der Wandung erreicht, wie es für den Kristallisationsprozess erwünscht ist.

Vorteilhaft lässt man zum Abschmelzen der Kristallschicht oder zum Schwitzen in gasförmigem Zustand zugeführtes Medium an der Wandung kondensieren, wobei der Druck des gasförmigen Mediums entsprechend der an der Wandung benötigten Temperatur geregelt wird. Es ist somit auch kein Wärmetauscher zur Zuführung von Heizenerige notwendig. Durch die Regelung des Drucks der gasförmigen Phase des Mediums kann die Verfahrenstemperatur optimal geregelt werden.

Von besonderem Vorteil ist es, wenn in mindestens einem Kristallisator kristallisiert und in mindestens einem anderen Kristallisator Kristallisat abgeschmolzen wird, wobei das in einem Kristallisator beim Kristallisieren anfallende gasförmige Medium komprimiert und zum Abschmelzen des Kristallisats im anderen Kristallisator kondensiert wird. Es arbeitet somit abwechselnd der eine Kristallisator als Kondensator und der andere Kristallisator als Verdampfer einer Kältemaschine. Auf diese Weise wird sowohl die Kälteenergie als auch die Abwärme der Kältemaschine direkt verwendet. Insgesamt ergibt sich so eine Energieersparnis von 30 Prozent oder mehr gegenüber den üblichen Verfahren. Dementsprechend kann auch die Kältemaschine kleiner dimensioniert werden als bei den Verfahren gemäss dem Stand der Technik.

Gemäss einer besonders vorteilhaften Ausführungsform des Verfahrens wird beim Abschmelzen des Kristallisats dem Kristallisator zusätzlich externe Wärmeenergie zugeführt, und nachher wird die überschüssige Wärmeenergie wieder abgeführt. Dies ermöglicht eine erhebliche Flexibilisierung der Verfahrensführung. So kann beispielsweise das Abschmelzen des Kristallisats rascher erfolgen als das Kristallisieren, wenn beim Abschmelzen dem Kristallisator zusätzlich externe Wärmeenergie zugeführt wird, und die überschüssige Wärmeenergie nachher wieder abgeführt wird. Die Kühlmaschine kann immer unabhängig von der momentanen benötigten Prozesswärme gefahren werden. Dies ermöglicht es, durch Regeln der Drücke jeden Kristallisator unabhängig von den andern zu fahren. Es können somit Temperaturrampen, Auslösetemperaturen, Heizrampen zum partiellen Schmelzen, usw. gefahren werden.

Die Erfindung betrifft auch eine Vorrichtung zur Durchführung des Verfahrens. Diese Vorrichtung besitzt einen ein Gehäuse aufweisenden Kristallisator, bei welchem der Kristallisationsraum vom Mediumraum durch eine Wandung abgetrennt ist, an welcher Kristallisat abgeschieden werden kann und der Mediumraum mindestens einen Einlass und Auslass für flüssiges Medium aufweist. Erfindungsgemäss ist mindestens ein Anschluss zum Ein- oder Auslass von gasförmiger Phase des Mediums vorgesehen, sowie Mittel, um den Druck der gasförmigen Phase des Mediums im Kristallisator zu regeln.

Als Mittel zur Regelung des Drucks der gasförmigen Phase des Mediums können beispielsweise Regelklappen oder -ventile dienen, die auf Grund der von der Prozesssteuerung vorgegebenen Druck-Sollwerte bei der Kristallisation gasförmige Phase des Mediums aus dem Kristallisator ausströmen und beim Abschmelzen oder Schwitzen in den Kristallisator einströmen lassen. Wie bereits bei der Beschreibung des Verfahrens erwähnt wurde, kann über die Druckregelung die Verfahrenstemperatur optimal geregelt werden.

Zweckmässigerweise wird ein Hilfsverdampfer vorgesehen. Dieser kann bei Bedarf vorzugsweise zu einem als Verdampfer arbeitenden Kristallisator durch Verdampfung von flüssigem Medium gasförmiges Medium erzeugen. Der Hilfsverdampfer kann mit Abdampf betrieben werden. Sollte also zu irgendeiner Zeit mehr Wärmeenergie benötigt werden als bei der Kristallisation anfällt, so wird mittels Abdampf flüssiges Medium verdampft. Dies hat den Vorteil, dass jeder Kristallisator unabhängig von den anderen gefahren werden kann. So kann beispielsweise das Abschmelzen des Kristallisats in kürzerer Zeit erfolgen als die Kristallisation.

Um nach dem Abschmelzen des Kristallisats überschüssige Wärmeenergie abzuführen, kann ein Hilfskondensator vorgesehen werden, der beispielsweise mit Kühlwasser gekühlt wird. Wird Dampf bzw. Wasser als Medium verwendet, kann auf den Hilfsverdampfer verzichtet werden. Es genügt dann, den Druck und damit die Temperatur im Kristallisator dadurch abzusenken, dass Dampf abgelassen wird.

Bei einer vorteilhaften Ausführungsform der Erfindung ist die Wandung durch mindestens ein am Ende abgeschlossenes, vorzugsweise senkrecht angeordnetes Rohr gebildet, wobei Mittel vorgesehen sind, um flüssiges Medium in den Bereich des abgeschlossenen Endes zu führen, von wo es als Rieselfilm an der Wandung hinunterfliessen kann. Wie nachher noch näher ausgeführt wird, ermöglicht dies eine besonders vorteilhafte Konstruktion des Kristallisators, welche auch bei relativ hohen Drücken des verwendeten Mediums lecksicher ist.

Als Mittel zur Zufuhr von flüssigem Medium dient vorteilhaft ein Steigrohr. Um den Rieselfilm nicht zu behindern, kann das Steigrohr durch Abstandhalter von der Wandung beabstandet sein.

Eine vorteilhafte Ausbildung der Vorrichtung sieht vor, dass der Kristallisator eine Vielzahl von Rohren aufweist, welche unten mit einem Boden fest verbunden sind und oben durch Oeffnungen eines Verteilerbodens ragen, wobei ein Spalt gebildet wird, durch welchen das zu fraktionierende flüssige Gemisch der Aussenwand der Rohre entlang nach unten fliessen kann. Bei dieser Konstruktion wird sichergestellt, dass bei Temperaturunterschieden die Rohre unabhängig voneinander expandieren und kontrahieren können. Weitere Vorteile der in den Unteransprüchen definierten Vorrichtung sind schon bei der Beschreibung der Verfahrensmerkmale erwähnt worden oder ergeben sich weiter aus der nachfolgenden Beschreibung.

Ein Ausführungsbeispiel der Erfindung wird nun unter Bezugnahme auf die Zeichnung beschrieben.

Es zeigt:
- Fig.1: eine schematische Darstellung des erfindungsgemässen Kühlsystems für eine Anlage zur mehrstufigen fraktionierte Kristallisation,
- Fig.2: einen Kristallisator, der sich insbesondere für ein Kühlsystem nach Figur 1 eignet,
- Fig.3: eine Variante des Systems von Fig. 1 für den Betrieb mit Dampf.

Die Erfindung ist besonders vorteilhaft für die mehrstufige Kristallisation mit zwei oder mehr Kristallisatoren. Die Erfindung wird daher am Beispiel einer mehrstufigen Kristallisation beschrieben, ist aber nicht auf diese beschränkt. Da Anlagen zur mehrstufigen Kristallisation dem Fachmann bestens bekannt sind, braucht hier nicht auf Einzelheiten der Stofführung in solchen Anlagen eingegangen werden. Es kann vielmehr auf die einschlägige Fachliteratur verwiesen werden sowie auf die eingangs erwähnten Druckschriften.

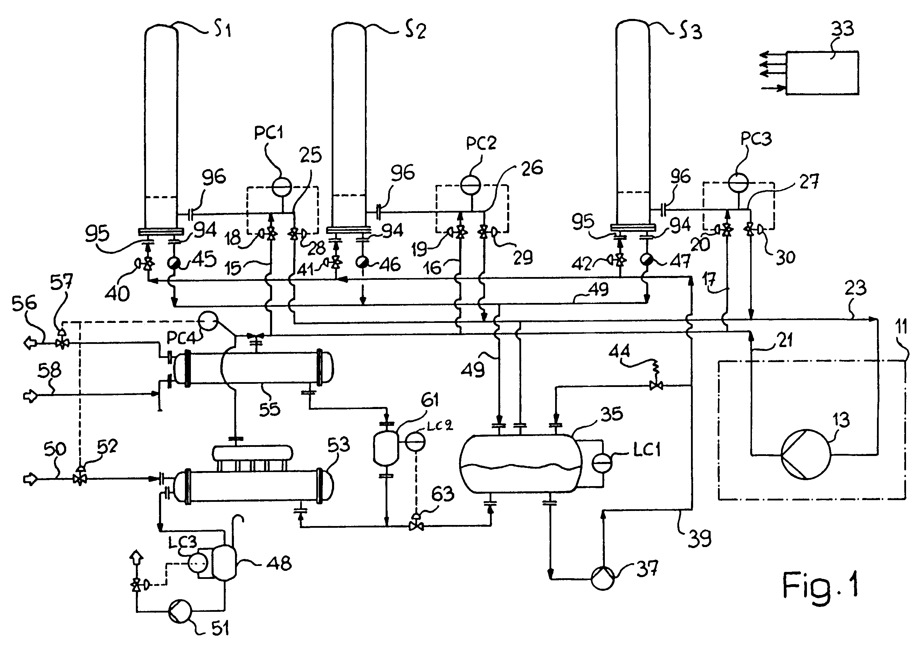

Bei der in Figur 1 dargestellten Kristallisationsanlage für die mehrstufige fraktionierte Kristallisation sind beispielsweise drei Kristallisatoren S1, S2 und S3 vorgesehen. In der Regel sind immer mindestens zwei Kristallisatoren gleichzeitig im Betrieb und zwar der eine als Verdampfer und der andere als Kondensator einer Kühlmaschine 11. Ein Kristallisator wirkt als Verdampfer, wenn kristallisiert wird und als Kondensator, wenn abgeschmolzen wird. Bei der erfindungsgemässen Anlage besteht somit die Kühlmaschine 11 nicht aus der üblichen Einheit von Kompressor 13 und Verdampfer und Kondensator. Verdampfer und Kondensator sind vielmehr aus der Einheit 11 ausgelagert und stellen einen Teil der Kristallisatoren S1, S2, S3 dar. Dies setzt voraus, dass grundsätzlich immer mindestens einer der Kristallisatoren als Verdampfer mindestens ein anderer als Kondensator arbeitet, es sei denn, es sei zusätzlich ein Hilfskondensator oder ein Hilfsverdampfer vorhanden. Aber auch wenn viele Kristallisatoren gleichzeitig als Verdampfer bzw. Kondensatoren verschiedener Verfahrensstufen arbeiten, kann bei jedem Kristallisator die Temperatur der Wandung, an welcher das Kristallisat gebildet wird oder gebildet wurde, verschieden gehalten werden. Zu diesem Zweck muss bloss der Druck der gasförmigen Phase des Mediums im jeweiligen Kristallisator entsprechend der an der Wandung benötigten Temperatur geregelt werden. Wenn mehr Wärmeenergie benötigt wird als die Kühlmaschine 11 Abwärme erzeugt, muss ein Hilfsverdampfer 53 vorgesehen werden. Der Steuerung des Druckes des gasförmigen Mediums in den Kristallisatoren S1, S2, S3 dienen die an der Leitung 25, 26 bzw. 27 angeschlossenen Mess- und Steuergeräte PC1, PC2 und PC3, wobei der Solldruck durch die Prozesssteuerung 33 bestimmt wird.

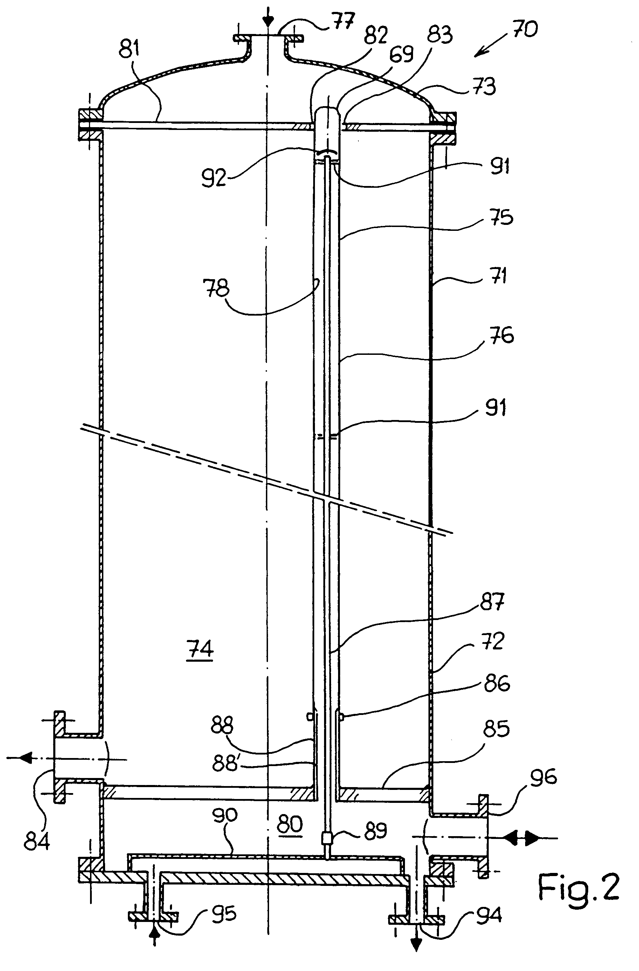

Von den Kristallisatoren S1, S2, S3 (Fig. 2: Stutzen 96) führt eine Leitung 25, 26, 27 zur Sammelleitung 23, welche zur Eingangseite des Kompressors 13 führt. In der Sammelleitung 23 herrscht ein relativ geringer Druck, z.B. 2 bar. Durch Regelklappen 28, 29, 30 kann der Druck des gasförmigen Mediums, z.B. Ammoniak, im Kristallisator beim Kristallisieren individuell geregelt werden. Dadurch wird die Verdampfungstemperatur des Mediums bestimmt, welches die Rohre des Kristallisators kühlt.

Von der Druckseite des Kompressors 13 kann gasförmiges Medium, über eine Verteilleitung 21 und Zweigleitungen 15, 16, 17 zu jedem Kristallisator S1, S2, S3 (Fig.2: Stutzen 96) geführt werden. In der Verteilleitung 21 herrscht ein relativ hoher Druck, z.B. 14 bar. Durch Regelklappen 18, 19, 20 in den Zweigleitungen 15, 16, 17 kann der Druck des gasförmigen Mediums im jeweiligen Kristallisator S1, S2, S3 beim Abschmelzen des Kristallisats individuell geregelt werden. Dadurch wird die Kondensationstemperatur des Mediums bestimmt, welche die Rohre des Kristallisators heizt.

Die Sollwerte des Drucks und damit der Temperatur bei der Kristallisation und beim Abschmelzen können mittels der Prozesssteuerung 33 bestimmt werden.

Der Förderung von flüssigem Medium aus dem Sammeltank 35 zu den Kristallisatoren S1, S2, S3 dient die Förderpumpe 37, deren Druckseite an die Leitung 39 angeschlossen ist. Mit dem Bezugszeichen LC1 ist ein Flüssigkeitsniveau-Mess- und Steuergerät bezeichnet. Dem Einlass des flüssigen Mediums aus der Leitung 39 in die Kristallisatoren S1, S2, S3 dienen die Regel-Ventile 40, 41, 42. Ein Ueberströmventil 44 zwischen der Leitung 39 und dem Sammeltank 35 ermöglicht die Einstellung eines konstanten Vordrucks auf die Regelventile 40, 41, 42. Es ist wiederum die Prozesssteuerung 33, die bestimmt, welcher oder welche Kristallisatoren als Verdampfer arbeiten sollen und somit welches oder welche der Ventile 40, 41, 42 geöffnet oder geschlossen werden muss. Jeder der Kristallisatoren S1 bis S3 ist an einen Flüssigkeitsableiter 45, 46, 47 angeschlossen, um Ueberschusskühlmedium oder, wenn der Kristallisator als Kondensator arbeitet, Medium-Kondensat über die Leitung 49 dem Sammeltank 35 zuzuführen. Der Flüssigkeitsableiter ist so ausgebildet, dass er zwar Flüssigkeit ableitet, nicht aber Gas, so dass der Druck des gasförmigen Mediums im Kristallisator aufrechterhalten bleibt.

Das Abschmelzen des Kristallisats kann in wesentlich kürzerer Zeit durchgeführt werden als die Bildung des Kristallisats. Soll somit, wenn bei einem Kristallisator kristallisiert wird, bei einem anderen Kristallisator Kristallisat abgeschmolzen werden, so reicht die von der Kühlmaschine 11 gelieferte Abwärme nicht aus, um das Abschmelzen schneller als das Kristallisieren durchzuführen. Es muss somit Fremdwärme zugeführt werden. Zur Lieferung zusätzlicher Wärmeenergie ist ein Hilfsverdampfer 53 vorgesehen. Der Hilfsverdampfer 53 kann über die Leitung 50 und das Ventil 52 beispielsweise mit Abdampf betrieben werden. Das Ventil 52 wird entsprechend dem von der Prozesssteuerung 33 bestimmten Solldruck und dem vom Mess- und Steuergerät PC4 gemessenen Druck in der Verteilleitung 21 gesteuert. Der Auslass des Hilfsverdampfers 53 ist an die Verteilleitung 21 angeschlossen, um dieser gasförmiges Medium zuzuführen, wenn mehr Wärmeenergie verbraucht werden sollte als die Kühlmaschine 11 im Moment erzeugt.

Zum Abführen überschüssiger Wärmeenergie ist ein Hilfskondensator 55 vorgesehen. Der Hilfskondensator 55 ist über die Leitungen 56, 58 und das Ventil 57 an einen Kühlwasserkreislauf anschliessbar. Der Hilfskondensator 55 ist an die Verteilleitung 21 angeschlossen, um dieser gasförmiges Medium zu entnehmen und zu kondensieren, wenn weniger Abwärme verbraucht werden sollte als die Kühlmaschine 11 im Moment liefert. Das Ventil 57 wird entsprechend dem von der Prozesssteuerung 33 bestimmten Solldruck und dem vom Mess- und Steuergerät PC4 gesteuert. Das vom Hilfskondensator 55 verflüssigte Medium kann in den Tank 61 fliessen, der als Vorlage für den Sammeltank 35 und den Hilfsverdampfer 53 dient. Mit dem Bezugszeichen LC2 ist ein Flüssigkeitsniveau-Mess- und Steuergerät LC2 bezeichnet, welches das Ventil 63 steuert. Die Zufuhr von flüssigem Medium vom Tank 61 zum Sammeltank 35 erfolgt über das Ventil 63.

Bezugsziffer 48 bezeichnet einen an den Hilfsverdampfer 53 angeschlossenen Tank für Dampfkondensat. Kondensat im Tank 48 kann mit der Pumpe 51 zum Dampferzeuger (nicht eingezeichnet) zurückgepumpt werden. Dies wird durch Flüssigkeitsniveau-Mess-und Steuergerät LC3 veranlasst.

Die Kristallisatoren S1, S2, S3 aller Stufen können den gleichen Aufbau haben. Ein Ausführungsbeispiel eines Kristallisators ist in Figur 2 dargestellt. Der Kristallisator 70 besteht im wesentlichen aus einem Behälter 71, welcher oberhalb des Verteilerbodens 81 mit einem Deckel 73 abgeschlossen ist. Im Behälter 71 ist eine Vielzahl von Rohren 75 angeordnet (nur eines ist eingezeichnet). Sie bilden die Wandung, an der die Kristallisation stattfindet. An den Aussenwänden 76 der Rohre 75 kann das flüssige Gemisch in Form eines Rieselfilms herabfliessen. Der Einlass 77 für das flüssige Gemisch befindet sich im Deckel 73. Der Verteilerboden 81 besitzt eine Vielzahl von Oeffnungen 82, durch welche die dem oberen Ende 69 abgeschlossenen Rohre 75 nach oben ragen. Durch den Spalt 83 kann dann das flüssige Gemisch als Rieselfilm nach unten fliessen. Dabei bildet sich wegen der Kühlung des Rohres 75 an der äusseren Wand 76 das gewünschte Kristallisat. Der Auslass 84 befindet sich beim Produktboden 85. Vom Auslass 84 kann das flüssige Gemisch durch eine nicht eingezeichnete Umwälzpumpe in bekannter Weise zum Einlass 77 rezirkuliert werden, bis der Kristallisationsvorgang in dieser Stufe beendet ist.

Der Kristallisator 70 kann abwechslungsweise als Verdampfer oder als Kondensator dienen. Zu diesem Zweck befindet sich im Innern jedes Rohrs 75 ein Steigrohr 87, das von einem aus Montagegründen vorgesehenen Schraubanschluss 89 bei der Steigrohrplatte 90 in das Rohr 75 führt. In diesem wird das Steigrohr 87 durch Abstandhalter 91 zentriert. In einem Abstand vom oberen Ende des Steigrohrs 87 ist ein Kühlmittelverteiler 92 angeordnet, der dafür sorgt, dass das als Kühlmittel verwendete Medium in Form eines Rieselfilms an der Innenwand 78 des Rohres 75 nach unten fliesst, um das Rohr 75 zu kühlen. Bei dieser Anordnung des Kühlmittelverteilers 92 wird der obere Teil des Rohrs 75 und der Verteilerboden 81 nicht gekühlt, so dass das flüssige Gemisch immer ungehindert durch den Spalt 83 fliessen kann. Arbeitet jedoch der Kristallisator als Kondensator zum Schmelzen des Kristallisats, so wird durch das im Rohr 75 kondensierende Medium auch der obere Teil des Rohrs beheizt.

In einem Abstand von Produktboden 85 ist am Rohr 75 ein Absatz 86 vorgesehen, der z.B. aus einem am Rohr 75 befestigten Ring besteht und die Aufgabe besitzt, das am Rohr sich bildende Kristallisat nicht abrutschen zu lassen. Ein vorzugsweise im Rohrinnern angeordnetes Ablenkrohr 88 für den Rieselfilm reicht bis zum Absatz 86 und verhindert eine Kristallisatbildung im Bereich unterhalb des Absatzes 86. Zwischen dem Rohr 75 und dem Ablenkrohr 88 befindet sich ein Hohlraum 88'. Arbeitet der Kristallisator als Kondensator, so wird durch das im Hohlraum 88' an der Wandung des Rohrs 75 kondensierende Medium auch der untere Abschnitt des Rohrs 75 beheizt.

Beim Kristallisieren unverdampftes Medium oder beim Abschmelzen oder Schwitzen sich bildendes Medium-Kondensat kann durch den Stutzen 94 zum Flüssigkeitsableiter 45, 46, 47 (Fig. 1) abfliessen. Der Stutzen 95 dient der Zufuhr von flüssigem Medium vom Ventil 40, 41 bzw. 42. Der Stutzen 96 dient dem Ablassen des verdampften Mediums bei der Kristallisation bzw. der Zufuhr von gasförmigen Medium beim Abschmelzen des Kristallisats.

Es ist nun zu beachten, dass der Kristallisator 70 durch den Produktboden 85 in zwei Räume 74, 80 aufgetrennt ist, zwischen welchen erhebliche Druckunterschiede bestehen können. So herrscht im Kristallisationsraum 74 gewöhnlich Umgebungsdruck oder bloss leichter Ueberdruck, im Mediumraum 80 hingegen z.B. ein Druck in der Grössenordnung von 14 bar. Es ist nun von grosser Bedeutung, dass nicht durch irgendein Leck Medium in den Produktraum 74 gelangen kann. Beim erfindungsgemässen Aufbau des Kristallisators 70 sind keine zu Undichtigkeiten Anlass gebende Verschraubungen von Kristallisatorrohren 75 notwendig. Weil das Medium durch ein Steigrohr 87 in den Oberteil des Rohrs 75 geführt wird, kann das Rohr 75 am oberen Ende 69 zugeschweisst sein. Unten kann das Rohr 75 in den Produktboden 85 eingeschweisst sein, der seinerseits mit dem Mantel 72 des Behälters 71 verschweisst sein kann. Solche Schweissverbindungen sind im Betrieb des Kristallisators gasdicht. Ein weiterer Vorteil der gezeigten Konstruktion besteht darin, dass sich die Rohre 75 im Verteilerboden 81 frei bewegen können. Es besteht somit keine Gefahr, dass ein Rohr 75, bei dem die Kühlung oder Heizung ausfällt und somit anders als die anderen Rohre kontrahiert und expandiert, beschädigt wird.

Die in Fig. 1 dargestellte Kühlanlage, welche mit einem Kühlmedium wie Ammoniak oder ein Kühlmedium mit ähnlichen Eigenschaften arbeitet, eignet sich insbesondere zur Kristallisation von Produkten mit einem Kristallisationspunkt von weniger als etwa 120°C . Liegt der Kristallisationspunkt etwa im Bereich von 100 bis 230°C kann statt Ammoniak Wasserdampf zur Anwendung gelangen, und auf die Kühlmaschine 11 von Fig. 1 kann verzichtet werden.

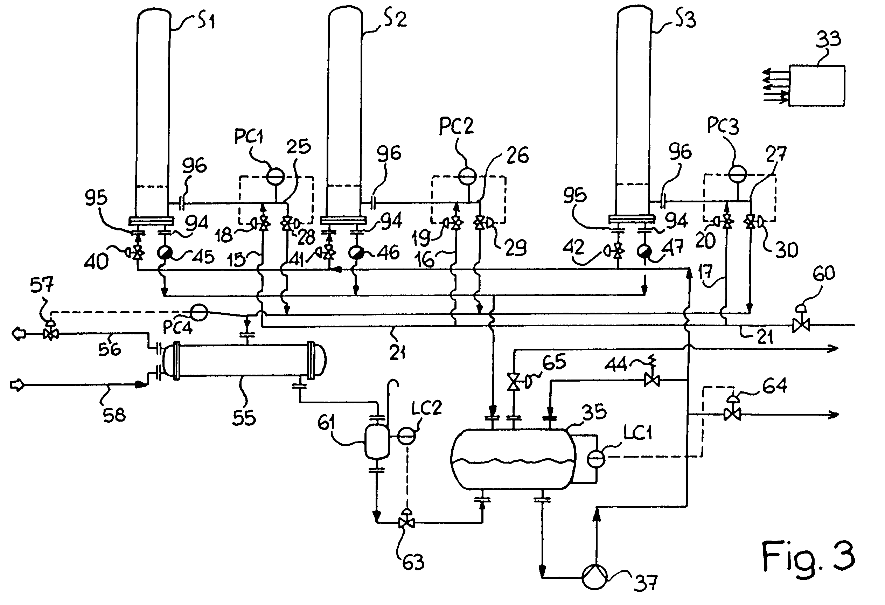

Fig. 3 zeigt nun eine zur Anwendung von Dampf konzipierte Anlage. Für gleiche Teile werden wiederum die gleichen Bezugszeichen verwendet. Da der Aufbau der Anlage von Fig. 3 weitgehend derselbe ist wie jener von Fig. 1, kann sich die nachfolgende Beschreibung auf die wesentlichen Unterschiede beschränken. Es ist bereits erwähnt worden, dass eine Kühlmaschine fehlt. Es ist innerhalb der Anlage auch kein geschlossener Kreislauf des Mediums mehr vorhanden. Es wird vielmehr Dampf in die Anlage eingeführt und Kondensat abgeführt. Die dadurch bedingten Aenderungen sind minim. So ist die Verteilleitung 21 statt an eine Kühlmaschine über das Ventil 60 an das Dampfnetz anschliessbar.Ueber das Ventil 65 kann Abdampf abgelassen werden kann. Weiter kann aus dem Sammeltank 35 bei Bedarf über das Ventil 64 Kondensat, also Wasser, aus der Anlage abgelassen werden.

Es sind verschiedene Aenderungen möglich, ohne vom Erfindungsgedanken abzuweichen. So ist es auch möglich, bei einem Kristallisator gemäss der DE-A-1 799 123 das flüssige Medium im Kristallisator zu versprühen, um die Rohre aussen zu benetzen. Weiter ist es z.B. möglich, eine mehrstufige Kristallisation mit einem einzigen Kristallisator durchzuführen, wobei das bei der Kristallisation anfallende flüssige Medium in einem Tank zur späteren Verwendung bei der Kristallisation gespeichert werden kann.

## Patentansprüche

1. Verfahren zur Stofftrennung aus einem flüssigen Gemisch durch fraktionierte Kristallisation durch Abscheiden einer Kristallschicht auf einer Seite einer Wandung (75) eines Kristallisators (S1, S2, S3, 70), die auf der anderen Seite gekühlt wird, und nachfolgendem Abschmelzen der Kristallschicht, dadurch gekennzeichnet, dass man zur Kristallisation ein Medium an der genannten anderen Seite der Wandung (75, 78) verdampfen lässt und dass der Druck der gasförmigen Phase des Mediums im Kristallisator (S1, S2, S3) entsprechend der für die Kristallisation benötigten Temperatur geregelt wird.

2. Verfahren nach Anspruch 1, dadurch gekennzeichnet, dass man das Medium als Rieselfilm an der Wandung (75, 78) hinunterfliessen lässt.

3. Verfahren nach Anspruch 1 oder 2, dadurch gekennzeichnet, dass man zum Abschmelzen der Kristallschicht oder zum Schwitzen in gasförmigem Zustand zugeführtes Medium an der Wandung kondensieren lässt und dass der Druck des gasförmigen Mediums entsprechend der an der Wandung benötigten Temperatur geregelt wird.

4. Verfahren nach Anspruch 2 oder 3, dadurch gekennzeichnet, dass in mindestens einem Kristallisator kristallisiert und in mindestens einem anderen Kristallisator Kristallisat abgeschmolzen wird und dass das in einem Kristallisator beim Kristallisieren anfallende gasförmige Medium komprimiert und zum Abschmelzen des Kristallisats im anderen Kristallisator kondensiert wird.

5. Verfahren nach Anspruch 4, dadurch gekennzeichnet, dass beim Abschmelzen dem Kristallisator zusätzlich externe Wärmeenergie zugeführt wird, und dass die überschüssige Wärmeenergie nachträglich wieder abgeführt wird.

6. Verfahren nach Anspruch 5, dadurch gekennzeichnet, dass die Zufuhr von externer Wärmeenergie durch Verdampfung von flüssigem Medium in einem Hilfsverdampfer erfolgt.

7. Verfahren nach Anspruch 5 oder 6, dadurch gekennzeichnet, dass das Abführen der überschüssigen Wärmeenergie mittels eines Hilfskondensators (55) erfolgt.

8. Vorrichtung zur Durchführung des Verfahrens nach einem der Ansprüche 1 bis 7 mit mindestens einem ein Gehäuse (71) aufweisenden Kristallisator (70), bei welchem ein Kristallisationsraum (74) von einem Mediumraum (80) durch eine Wandung (75) abgetrennt ist, an welcher Kristallisat abgeschieden werden kann und der Mediumraum (80) mindestens einen Einlass (95) und einen Auslass (94) für flüssiges Medium aufweist, dadurch gekennzeichnet, dass mindestens ein Anschluss (96) zum Ein- und Auslass von gasförmiger Phase des Mediums vorgesehen ist und dass Mittel (33; 18, 28; 19, 29; 20, 30) vorgesehen sind, um den Druck der gasförmigen Phase im Kristallisator zu regeln.

9. Vorrichtung nach Anspruch 8, gekennzeichnet durch einen Hilfsverdampfer (53).

10. Vorrichtung nach Anspruch 9, gekennzeichnet durch einen Hilfskondensator (55).

11. Vorrichtung nach einem der Ansprüche 8 bis 10, dadurch gekennzeichnet, dass die Wandung durch mindestens ein an einem Ende (69) abgeschlossenes, vorzugsweise senkrecht angeordnetes Rohr (75) gebildet ist und dass Mittel (87) vorgesehen sind, um flüssiges Medium in den Bereich des abgeschlossenen Endes (69) zu führen, von wo es als Rieselfilm an der Wandung hinunterfliessen kann.

12. Vorrichtung nach Anspruch 11, dadurch gekennzeichnet, dass als Mittel zur Zufuhr von flüssigem Medium ein Steigrohr (87) dient.

13. Vorrichtung nach einem der Ansprüche 8 bis 12, dadurch gekennzeichnet, dass das Steigrohr (87) durch Abstandhalter (91) von der Wandung (75) beabstandet ist.

14. Vorrichtung nach einem der Ansprüche 8 bis 13 mit einer Vielzahl von Rohren, welche unten mit einem Boden (85) fest verbunden sind und oben durch Oeffnungen (82) eines Verteilerbodens (81) ragen, wobei ein Spalt (83) gebildet wird, durch welchen das zu fraktionierende flüssige Gemisch an der Aussenwand (76) der Rohre (75) entlang nach unten fliessen kann.

15. Vorrichtung nach Anspruch 14, dadurch gekennzeichnet, dass das Steigrohr (87) bis in einen Bereich unterhalb des Verteilerbodens (81) ragt.

16. Vorrichtung nach einem der Ansprüche 8 bis 15, dadurch gekennzeichnet, dass im unteren Bereich der Wandung (75) eine Ablenkvorrichtung (88), z.B. ein Ablenkrohr, für den Rieselfilm, angeordnet ist, wobei zwischen der Wandung (75) und der Ablenkvorrichtung (88) ein Hohlraum (88') besteht.

17. Vorrichtung nach einem der Ansprüche 14 bis 16, dadurch gekennzeichnet, dass der Deckel (73) des Gehäuses (71) über dem Verteilerboden (81) angeordnet ist.

## Claims

1. A method of separating substances from a liquid mixture by fractional crystallisation by depositing a crystal layer on one side of a wall (75) of a crystalliser (S1, S2, S3, 70) which is cooled on the other side, and subsequently melting the crystal layer, characterised in that for the purpose of crystallisation a medium is evaporated on the said other side of the wall (75, 78) and in that the pressure of the gaseous phase of the medium in the crystalliser (S1, S2, S3) is controlled in accordance with the temperature required for crystallisation.

2. A method according to claim 1, characterised in that the medium is made to trickle in a film down the wall (75, 78).

3. A method according to claim 1 or 2, characterised in that the medium supplied for melting the crystal layer or for sweating in the gaseous state is condensed on the wall, and in that the pressure of the gaseous medium is controlled in accordance with the temperature required at the wall.

4. A method according to claim 2 or 3, characterised in that at least one crystalliser is used for crystallisation and at least one other crystalliser is used for melting the crystals, and in that the gaseous medium occurring in one crystalliser during crystallisation is compressed and is condensed for melting the crystals in the other crystalliser.

5. A method according to claim 4, characterised in that during the melting process, the crystalliser is supplied with additional external heat energy, and the excess heat energy is subsequently discharged.

6. A method according to claim 5, characterised in that external heat energy is supplied by evaporating liquid medium in an auxiliary evaporator.

7. A method according to claim 5 or 6, characterised in that the excess heat energy is discharged by means of an auxiliary condenser (55).

8. An apparatus for working the method according to any of claims 1 to 7, comprising at least one crystalliser (70) having a casing (71) in which a crystallisation space (74) is separated from a medium space (80) by a wall (75) on which crystals can be deposited, and the medium space (80) has at least one inlet (95) and one outlet (94) for liquid medium, characterised in that at least one connection (96) for inflow and discharge of the gaseous phase of the medium is provided, and in that means (33; 18, 28; 19, 29; 20, 30) are provided for adjusting the pressure of the gaseous phase in the crystalliser.

9. Apparatus according to claim 8, characterised by an auxiliary evaporator (53).

10. Apparatus according to claim 9, characterised by an auxiliary condenser (55).

11. Apparatus according to any of claims 8 to 10, characterised in that the wall is formed by at least one tube (75), preferably disposed vertically and closed at one end (69), and in that means (87) are provided for conveying liquid medium to the region of the closed end (69), from where it can trickle in a film down the wall.

12. Apparatus according to claim 11, characterised in that the means for supplying liquid medium is a riser (87).

13. Apparatus according to any of claims 8 to 12, characterised in that the riser (87) is held at a distance from the wall (75) by spacers (91).

14. Apparatus according to any of claims 8 to 13 comprising a number of tubes which are firmly connected to a base (85) and project at the top through openings (82) in a distribution tray (81), a gap (83) being formed through which the liquid mixture for fractionation can flow downward along the outer wall (76) of the tubes (75).

15. Apparatus according to claim 14, characterised in that the riser (87) extends into a region below the distribution tray (81).

16. Apparatus according to any of claims 8 to 15, characterised in that a deflecting device (88), e.g. a deflecting tube, is provided in the lower region of the wall (75) for the trickling film, and a cavity (88') is left between the wall (75) and the deflecting device (88).

17. Apparatus according to any of claims 14 to 16, characterised in that the cover (73) of the casing (71) is disposed above the distribution tray (81).

## Revendications

1. Procédé de séparation de matière d'avec un mélange liquide par cristallisation fractionnée, par dépôt d'une couche de cristaux sur un côté d'une paroi (75) d'un cristallisateur (S1,S2,S3,70), paroi qui est refroidie de l'autre côté, puis par fusion de la couche de cristaux, caractérisé en ce que, pour la cristallisation, on fait en sorte qu'un agent s'évapore sur ledit autre côté de la paroi (75,78), et en ce que la pression de la phase gazeuse de l'agent dans le cristallisateur (S1,S2,S3) est réglée conformément à la température nécessaire pour la cristallisation.

2. Procédé selon la revendication 1, caractérisé en ce qu'on fait s'écouler l'agent vers le bas sous forme de film ruisselant sur la paroi (75,78).

3. Procédé selon la revendication 1 ou 2, caractérisé en ce que, pour la fusion de la couche de cristaux ou pour l'exsudation, on fait en sorte que l'agent, introduit à l'état gazeux, se condense sur la paroi, et en ce que la pression de l'agent gazeux est réglée conformément à la température nécessaire sur la paroi.

4. Procédé selon la revendication 2 ou 3, caractérisé en ce que la cristallisation a lieu dans au moins un cristallisateur et le produit de cristallisation est fondu dans au moins un autre cristallisateur, et en ce que l'agent gazeux formé dans un cristallisateur lors de la cristallisation est comprimé et est condensé pour la fusion du produit de cristallisation dans l'autre cristallisateur.

5. Procédé selon la revendication 4, caractérisé en ce que de l'énergie calorifique externe est fournie en plus au cristallisateur lors de la fusion, et en ce que l'énergie calorifique en excès est éliminée ultérieurement.

6. Procédé selon la revendication 5, caractérisé en ce que la fourniture d'énergie calorifique externe s'effectue par évaporation d'agent liquide dans un évaporateur auxiliaire.

7. Procédé selon la revendication 5 ou 6, caractérisé en ce que l'élimination de l'énergie calorifique en excès est effectuée au moyen d'un condenseur auxiliaire (55).

8. Dispositif pour l'exécution du procédé selon l'une quelconque des revendications 1 à 7, comportant au moins un cristallisateur (70) qui présente une enveloppe (71) et dans lequel une chambre de cristallisation (74) est séparée d'une chambre d'agent (80) par une paroi (75) sur laquelle du produit de cristallisation peut se déposer et la chambre d'agent (80) présente au moins une entrée (95) et une sortie (94) pour l'agent liquide, caractérisé en ce qu'il est prévu au moins un raccord (96) pour l'admission et l'échappement de phase gazeuse de l'agent, et en ce que des moyens (33; 18,28;19,29;20,30) sont prévus pour régler la pression de la phase gazeuse dans le cristallisateur.

9. Dispositif selon la revendication 8, caractérisé par un évaporateur auxiliaire (53).

10. Dispositif selon la revendication 9, caractérisé par un condenseur auxiliaire (55).

11. Dispositif selon l'une quelconque des revendications 8 à 10, caractérisé en ce que la paroi est constituée par au moins un tube (75) fermé à une extrémité (69) et disposé de préférence verticalement, et en ce que des moyens (87) sont prévus pour envoyer de l'agent liquide dans la région de l'extrémité fermée (69), d'où il peut s'écouler vers le bas sous la forme d'un film ruisselant sur la paroi.

12. Dispositif selon la revendication 11, caractérisé en ce qu'un tube ascendant (87) sert de moyen pour envoyer de l'agent liquide.

13. Dispositif selon l'une quelconque des revendications 8 à 12, caractérisé en ce que le tube ascendant (87) est maintenu à distance de la paroi (75) par des écarteurs (91).

14. Dispositif selon l'une quelconque des revendications 8 à 13, comportant une multiplicité de tubes qui sont fixés rigidement en bas à une plaque (85) et font saillie en haut à travers des ouvertures (82) d'une plaque répartitrice (81) en formant une fente (83) par laquelle le mélange liquide à fractionner peut couler vers le bas le long de la paroi extérieure (76) du tube (75).

15. Dispositif selon la revendication 14, caractérisé en ce que le tube ascendant (87) se dresse jusqu'à une région située au-dessous de la plaque répartitrice (81).

16. Dispositif selon l'une quelconque des revendications 8 à 15, caractérisé en ce qu'il est disposé, dans la région inférieure de la paroi (75), un dispositif de déviation (88), par exemple un tube de déviation, pour le film ruisselant, un espace vide (88') étant ménagé entre la paroi (75) et le dispositif de déviation (88).

17. Dispositif selon l'une quelconque des revendications 14 à 16, caractérisé en ce que le couvercle (73) de l'enveloppe (71) est disposé au-dessus de la plaque répartitrice (81).
